# EUROPÄISCHE PATENTSCHRIFT

(11) **EP 1 177 971 B1**
(45) Veröffentlichungstag und Bekanntmachung des Hinweises auf die Patenterteilung: **29.09.2004**
(21) Anmeldenummer: 01202881.7
(22) Anmeldetag: 30.07.2001
(51) Int. Cl.: B62D 53/06

(54) **Verfahrbare Konstruction für Gütertransport und dergleichen**
Mobile apparatus for transporting goods
Dispositif mobile pour le transport de marchandises

(30) Priorität: 04.08.2000 BE 200000490
(43) Veröffentlichungstag der Anmeldung: 06.02.2002
(73) Patentinhaber: Renders SA, 1724 Luxemburg (LU)
(72) Erfinder: Renders Franciscus, 2380 Ravels (Poppel) (BE)
(74) Vertreter: Donné, Eddy

(56) Entgegenhaltungen:
- EP-A- 0 107 746
- EP-A- 0 553 929
- DE-A- 1 630 282
- DE-A- 2 808 173
- DE-A- 3 207 582
- FR-A- 2 715 627
- US-A- 4 740 007

## Beschreibung

Diese Erfindung betrifft eine verfahrbare Konstruktion für Gütertransport und dergleichen, sowie auch Fahrzeugteile, Teile und dergleichen, die einen Teil davon bilden.

In erster Linie betrifft sie somit eine Konstruktion für Gütertransport, jedoch kann sie allgemeiner auch in allerhand Anwendungen verwendet werden, selbst für Personentransport, beispielsweise in mehrteiligen Buskonstruktionen. Eine Konstruktion nach dem Oberbegriff des Anspruchs 1 ist aus der EP-A- 107746 bekannt. Spezieller bezweckt die Erfindung eine verfahrbare Konstruktion, die verschiedene Verwendungsmöglichkeiten zulässt.

Hierzu betrifft die Erfindung eine verfahrbare Konstruktion für Gütertransport und dergleichen, mit den Merkmalen des Anspruchs 1. Durch die Konstruktion der Erfindung wird es sowohl möglich, zwei Fahrzeugteile auf unterschiedliche Arten zusammenzubringen, als auch das verfahrbare Element in anderen Kombinationen anzuwenden, wie aus der weiteren Beschreibung deutlich wird.

Die verfahrbare Konstruktion umfasst gemäß einer der Möglichkeiten der Erfindung denn auch einen Wagenrahmen, der, einerseits, nächst seinem vorderen Ende mit einem Kupplungsteil versehen ist, wodurch er als Auflieger an ein ziehendes Fahrzeugteil gekoppelt werden kann, und, andererseits, nächst seinem hinteren Ende derart ausgeführt ist, dass dieses mit dem verfahrbaren Element gekoppelt werden kann, wobei dieses letztere dann eine Stützfunktion erfüllt. Einer Variante gemäß ist das Ganze derart gedacht, dass eine derartige Koppelung auch mit dem hinteren Ende eines Anhängers verwirklicht werden kann.

Zur Verwirklichung der vorgenannten Koppelung werden vorzugweise durch einen Benutzer manuell, automatisch oder halbautomatisch bedienbare Kupplungselemente verwendet, womit der Rahmen des verfahrbaren Gestells mit dem vorgenannten Wagenrahmen verbunden werden kann.

Dadurch dass das verfahrbare Element in Bezug zum Wagenrahmen in Fahrtrichtung bewegbar oder verstellbar ist, kann der durch das verfahrbare Gestell gebildete Stützpunkt an unterschiedlichen Stellen lokalisiert werden, dies in Funktion der gewünschten Fahrzeugkombination und/oder in Funktion der gewünschten Gewichts- und Belastungsverteilung.

Weiterhin wird bevorzugt, dass das verfahrbare Element mindestens derart an den Wagenrahmen gekoppelt werden kann, dass es bis über das hintere Ende des Wagenrahmens reicht, spezieller noch, dass es über einen Abstand hinter dem hinteren Ende des Wagenrahmens herausragt, sodass ein als Auflieger ausgeführtes zweites Fahrzeugteil mittels der besagten zweiten Mittel scharnierbeweglich an das mittels des Wagenrahmens und des verfahrbaren Elements geformte erste Fahrzeugteil gekoppelt werden kann. Derart kann eine Kombination verwirklicht werden, wobei zwei als Auflieger ausgeführte Fahrzeugteile scharnierbeweglich aneinander gekoppelt sind, oder ein Auflieger scharnierbeweglich hinter einem Anhänger befestigt ist.

In der am meisten bevorzugten Ausführungsform bestehen die besagten zweiten Mittel aus einem Koppelungselement, wie beispielsweise einer Kupplungsscheibe.

Gemäß einer besonderen Ausführungsform ist die Position der besagten zweiten Mittel, spezieller der Kupplungsscheibe, in Bezug zu dem verfahrbaren Element zumindest in Längsrichtung einstellbar. Der Abstand, über den die Kupplungsscheibe in Bezug zu dem verfahrbaren Element bewegt werden kann, ist abhängig von dem Ziel, das man hiermit erreichen möchte. Ein erstes Ziel kann darin bestehen, dass eine bestimmte Lastverteilung bei bestimmten Kombinationen von Fahrzeugteilen verwirklicht wird. Ein anderes Ziel kann darin bestehen, dass zwei mittels des verfahrbaren Gestells aneinander gekoppelte Fahrzeugteile in verschiedenen Abständen in Bezug zueinander positioniert werden können.

Gemäß noch einem besonderen Merkmal der Erfindung ist die Position der besagten zweiten Mittel, spezieller der Kupplungsscheibe, in Bezug zu dem verfahrbaren Element zumindest in der Höhe einstellbar. Dies gestattet, dass der Ladeboden eines als Auflieger an das verfahrbare Gestell gekoppelten Fahrzeugteils nächst dem vorderen Ende in der Höhe eingestellt werden kann, beispielsweise um den Ladeboden hauptsächlich in eine horizontale Position zu bringen und/oder um den Ladeboden in punkto Höhe an beispielsweise ein davor oder dahinter befindliches Fahrzeugteil anzupassen.

Gemäß noch einer bevorzugten Ausführungsform der Erfindung ist die verfahrbare Konstruktion dadurch gekennzeichnet, dass das Ganze Einstellmittel umfasst, die, wenn, einerseits, das verfahrbare Element mit dem besagten Wagenrahmen gekoppelt ist, womit es ein erstes Fahrzeugteil bildet, und, andererseits, ein zweites, als Auflieger ausgeführtes Fahrzeugteil mit seinem vorderen Ende an das verfahrbare Element gekoppelt ist, gestatten, dass das zweite Fahrzeugteil in Bezug zu dem ersten Fahrzeugteil in Längsrichtung zwischen mindestens zwei Positionen bewegbar ist, einer ersten Position, wobei die Ladeflächen beider Fahrzeugteile gegeneinander oder teilweise ineinander positioniert sind, beziehungsweise einer zweiten Position, wobei die Ladeflächen sich in einem Abstand auseinander befinden.

Diese Verstellbewegung kann erfindungsgemäß verwirklicht werden, indem entweder die besagten zweiten Mittel, spezieller die besagte Kupplungsscheibe, bewegt werden; oder indem das verfahrbare Element in Bezug zu dem Wagengestell, mit dem es verbunden ist, bewegt wird; oder durch eine Kombination von beidem.

In einer praktischen Ausführungsform können die besagten zwei Fahrzeugteile in Bezug zueinander derart gegeneinander positioniert werden, dass eine Durchlademöglichkeit entsteht.

Gemäß einer besonderen Möglichkeit umfasst die verfahrbare Konstruktion auch Koppelmittel, die die Verwirklichung einer starren Verbindung zwischen, einerseits, dem mittels des besagten verfahrbaren Elements und des besagten Wagenrahmens geformten ersten Fahrzeugteil und, andererseits, einem als Auflieger ausgeführten zweiten Fahrzeugteil gestatten, wobei diese Fahrzeugteile sich entweder teilweise ineinanderschieben oder nicht, wodurch ein einziges komplettes Fahrzeug entsteht.

Gemäß einem wichtigen bevorzugten Aspekt ist das verfahrbare Element mit einer Deichsel und/oder mit Mitteln zum Anbringen einer Deichsel versehen. Hierdurch kann das verfahrbare Element als sogenanntes Rangiergerät oder als vorderer scharnierbeweglicher Stützpunkt eines Anhängers verwendet werden.

In einer praktischen Ausführungsform ist die Deichsel am verfahrbaren Element unterbringbar, beispielsweise einklappbar und/oder einschiebbar, oder ist sie abnehmbar montiert, vorzugsweise mittels durch einen Benutzer leicht zu hantierender Koppelmittel. Dadurch kann die Deichsel einfach untergebracht oder abgenommen werden, wenn das verfahrbare Gestell bei einer der Anwendungen eingesetzt wird, wobei keine Deichsel erforderlich ist.

In einer besonderen Ausführungsform ist die verfahrbare Konstruktion dadurch gekennzeichnet, dass sie ein als Auflieger ausgeführtes Fahrzeugteil umfasst, mit einem einteilig durchlaufenden Wagenrahmen, dessen vorderes Ende durch ein ziehendes Fahrzeugteil gestützt werden kann, während am hinteren Ende eine oder mehr mit Rädern versehene Achsen vorhanden sind; und dass das besagte verfahrbare Element derart konfiguriert ist, dass es als Stützpunkt zwischen dem besagten vorderen und hinteren Ende am durchlaufenden Wagenrahmen angebracht werden kann. Dadurch kann ein sehr langes Fahrzeugteil verwirklicht werden, das doch gut gestützt ist.

Erfindungsgemäß ist es auch möglich, das verfahrbare Element als Zwischenstützpunkt bei einem Anhänger anzuwenden, zwischen den üblichen vorderen und hinteren Achsen.

Mit der Absicht, die Merkmale der Erfindung besser darzustellen, sind hiernach, als Beispiel ohne jeden einschränkenden Charakter, einige bevorzugte Ausführungsformen beschrieben, unter Verweis auf die beigefügten Zeichnungen, worin:
Figur 1 schematisch eine verfahrbare Konstruktion gemäß der Erfindung darstellt, wobei die Teile in entkuppeltem Zustand dargestellt sind;
Figur 2 eine Ansicht analog zu der von Figur 1 darstellt, wobei jedoch die verschiedenen Teile zu einer bestimmten Kombination verbunden sind;
Figur 3 eine Ansicht analog zu der von Figur 2 darstellt, wobei das verfahrbare Element sich in einer nach hinten verstellten Position befindet;
Figur 4 eine Ansicht analog zu der von Figur 3 darstellt, wobei ein zweites Fahrzeugteil scharnierbeweglich an das erste gekoppelt ist;
Figur 5 schematisch das hintere Teil des ersten Fahrzeugteils darstellt;
Figur 6 eine besondere Anwendung illustriert;
Figur 7 das zweite Fahrzeugteil von Figur 4 darstellt, jedoch direkt an ein ziehendes Fahrzeugteil gekoppelt;
Figur 8 noch eine Anwendungsmöglichkeit der verfahrbaren Konstruktion darstellt; die
Figuren 9 und 10 schematisch Querschnitte gemäß den Linien IX-IX beziehungsweise X-X in Figur 3 und Figur 8 darstellen; die
Figuren 11 und 12 noch zwei Anwendungsmöglichkeiten der Erfindung darstellen;
Figur 13 eine Draufsicht des in Figur 12 mit Pfeil F13 angedeuteten Teils darstellt;
Figur 14 eine Ansicht analog zu der von Figur 13 darstellt, jedoch für eine Variante.

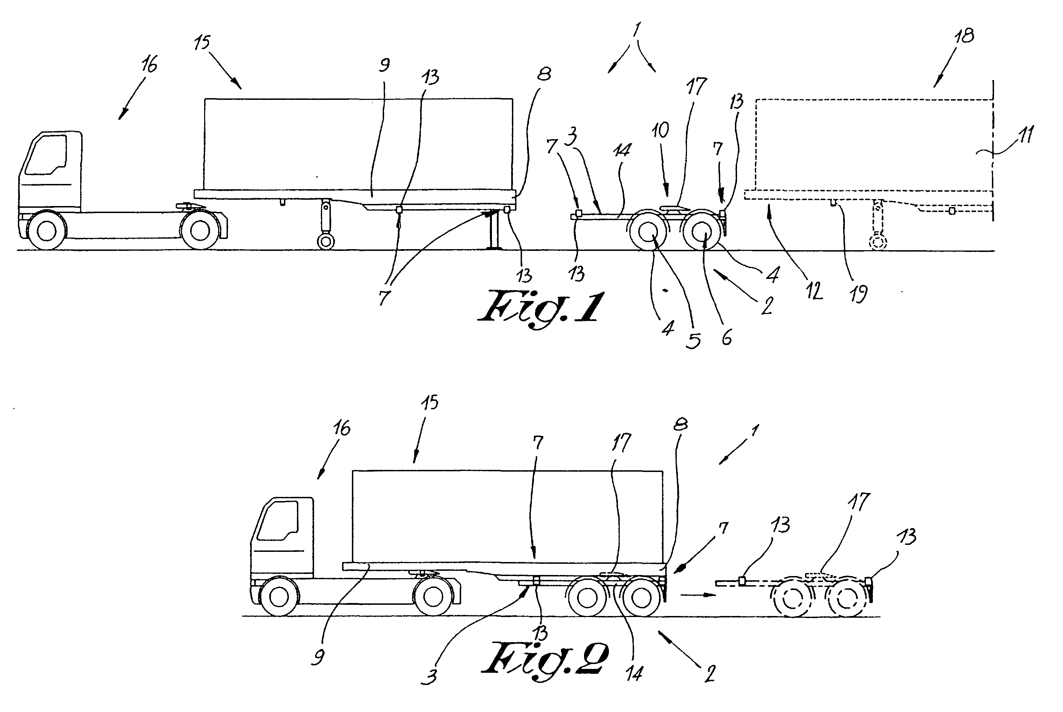

Wie in den Figuren 1 und 2 dargestellt, betrifft die Erfindung eine verfahrbare Konstruktion 1 für Gütertransport.

Die Besonderheit der Erfindung besteht darin, dass die verfahrbare Konstruktion 1 ein verfahrbares Element 2 umfasst, das mindestens geformt ist aus einem Gestell 3, das durch mindestens zwei mit Rädern 4 versehene Achsen 5-6 getragen wird, wobei dieses Gestell 3 einerseits erste Mittel 7 umfasst, wodurch es durch einen Benutzer lösbar unter dem hinteren Ende 8 eines, vorzugsweise als Auflieger oder Anhänger ausgeführten Wagenrahmens 9 angebracht werden kann, zum Stützen des hinteren Endes 8 dieses Wagenrahmens 9, und andererseits zweite Mittel 10 umfasst, wodurch ein Auflieger 11 mit seinem vorderen Ende 12 scharnierbeweglich an dem besagten Gestell 3 befestigt werden kann.

Die besagten ersten Mittel 7 bestehen aus durch einen Benutzer bedienbaren Koppelelementen 13, womit das verfahrbare Gestell 3, spezieller dessen Rahmen 14, mit dem vorgenannten Wagenrahmen 9 verbunden werden kann. Diese Koppelelemente 13 sind nur schematisch dargestellt, da sie in allerhand Formen ausgeführt werden können und die Konstruktion derartiger Koppelelemente 13 innerhalb des Bereichs jedes Fachmanns liegt. Der Wagenrahmen 9 und der Rahmen 14 können beispielsweise derart ausgeführt sein, dass sie, wie hiernach noch beschrieben, miteinander zusammenwirken können, sodass mittels dieses Zusammenwirkens zumindest bereits in bestimmte Richtungen eine Verriegelung erhalten wird, während eine Verriegelung in anderen Richtungen durch die Koppelelemente 13, die beispielsweise aus Zapfen-Öffnungs-Verbindungen bestehen können, erhalten werden kann. Es wird angemerkt, dass die Koppelelemente 13 sowohl aus manuell bedienbaren Koppelelementen als auch aus fernbedienbaren Koppelelementen, beispielsweise hydraulischen, pneumatischen oder elektrischen, bestehen können. Die Verwirklichung solcher Koppelelemente liegt innerhalb des Kenntnisbereichs eines Fachmanns.

Wenn das verfahrbare Element 2 mit dem Wagenrahmen 9 gekoppelt ist, entsteht, wie in Figur 2 dargestellt, ein erstes Fahrzeugteil 15 in Form eines Aufliegers, das, wie üblich, an ein ziehendes Fahrzeugteil 16, beispielsweise eine klassische Zugmaschine, gekoppelt werden kann.

Die vorgenannten zweiten Mittel 10 bestehen vorzugsweise aus einem Koppelteil einer klassischen Aufliegerkupplung, spezieller einer Kupplungsscheibe 17 oder dergleichen, woran der vorgenannte Auflieger 11, der ein zweites Fahrzeugteil 18 formt, mittels eines Drehzapfens, spezieller eines sogenannten Kingpin, 19 oder dergleichen gekoppelt werden kann.

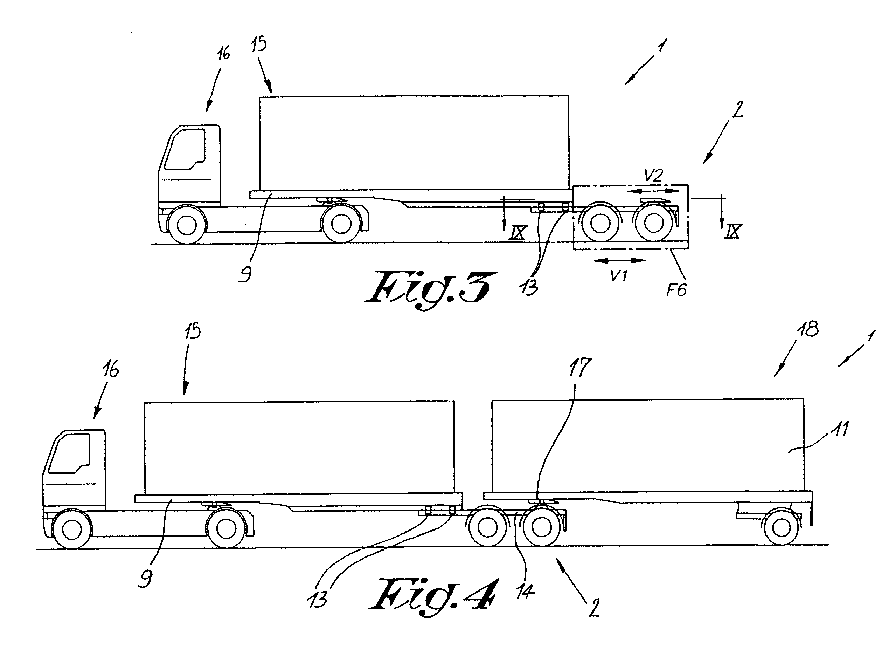

Wie in Figur 3 dargestellt, ist das verfahrbare Element 2 vorzugsweise verstellbar in Bezug zum Wagenrahmen 9, dies gemäß der Fahrtrichtung, entweder schrittweise in bestimmten Positionen oder stufenlos. Die Verstellbewegung kann hierbei entweder durch Blockieren des verfahrbaren Elements 2 und Verfahren des Wagenrahmens 9 mittels des ziehenden Fahrzeugteils 16 verwirklicht werden, oder durch Verwendung von Antriebsmitteln, die zwischen dem verfahrbaren Element 2 und dem Wagenrahmen 9 aktiv sind.

Das verfahrbare Element kann hierbei derart an den Wagenrahmen 9 gekoppelt werden, dass es, wie in Figur 3 abgebildet, bis über das hintere Ende 8 des Wagenrahmens 9 hinaus reicht, spezieller in einer derartigen Position, dass das verfahrbare Element 2 über einen Abstand hinter dem hinteren Ende 8 des Wagenrahmens 9 hinausragt, dass, wie in Figur 4 dargestellt, das vorgenannte zweite Fahrzeugteil 18 frei scharnierbeweglich an das erste Fahrzeugteil 15 gekoppelt werden kann.

Vorzugsweise ist, wie mit Pfeil V1 in Figur 3 angedeutet, nicht nur das verfahrbare Element 2 verstellbar in Bezug zum Wagenrahmen 9, sondern ist, wie mit V2 angedeutet, auch die Position der zweiten Mittel 10, spezieller der Kupplungsscheibe 17, in Bezug zum verfahrbaren Element 2 einstellbar.

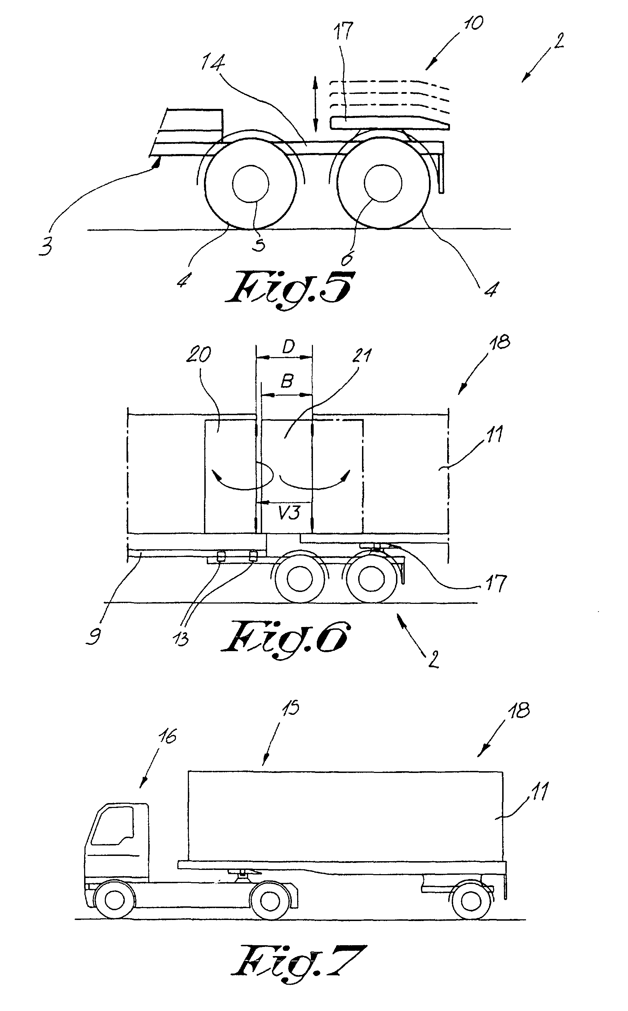

Figur 5 stellt schematisch dar, dass die Position der vorgenannten zweiten Mittel 10, spezieller der Kupplungsscheibe 17, eventuell in Bezug zum verfahrbaren Element 2 in der Höhe veränderbar ist. Die Höhenregelung kann hierbei entweder erhalten werden durch einen Mechanismus, der gestattet, die Kupplungsscheibe 17 oder dergleichen in Bezug zum Gestell 3 auf und nieder zu bewegen, oder durch Erzeugen eines Höhenunterschieds mit der Luftfederung der Räder 4, oder durch eine Kombination von beiden.

Die Funktionsweise und Anwendung der in den Figuren 1 bis 5 dargestellten Kombination ist aus den Figuren und der vorangehenden Beschreibung einfach abzuleiten. Wenn nur das erste Fahrzeugteil 15 angewendet wird, befindet das verfahrbare Element 2 sich, wie in Figur 2 abgebildet, vollständig unter dem Wagenrahmen 9. Wenn beide Fahrzeugteile 15-18 als Auflieger an ein einziges ziehendes Fahrzeugteil 16 gekoppelt werden, geschieht dies in einer Weise, wie in Figur 4 abgebildet.

Es wird angemerkt, dass während des Be- oder Entladens das zweite Fahrzeugteil 18 gegen das erste Fahrzeugteil 15 positioniert werden kann. Derart wird eine "Durchlademöglichkeit" geschaffen, wobei die Ladeböden beider Fahrzeugteile 15-18 gegeneinander anschließen oder nahezu gegeneinander anschließen, sodass Güter direkt von einem Fahrzeugteil in das andere gebracht werden können, und wobei somit auch Güter vom ersten Fahrzeugteil 15 durch das zweite Fahrzeugteil 18 bis an die Rückseite dieses letzteren gebracht werden können und umgekehrt. Hierdurch können beide Fahrzeugteile 15-18 eines nach dem anderen entlang der Rückseite der Kombination entladen und beladen werden.

Wie schematisch in Figur 6 wiedergegeben, ist hierbei nützlich, dass die Fahrzeugteile 15 und 18 stets in einem solchen Abstand D auseinandergeholt werden können, ohne sie zu entkoppeln, dass an der Rückseite des ersten Fahrzeugteils 15 vorgesehene Türen 20 und/oder an der Vorderseite des zweiten Fahrzeugteils 18 vorgesehene Türen 21, die eine Breite B aufweisen, die hauptsächlich mit der halben Breite des Fahrzeugs übereinstimmt, vollständig geöffnet werden können. Nach dem Öffnen der Türen 20-21 kann das zweite Fahrzeugteil 18 dann, wie mit Pfeil V3 angedeutet, gegen das erste Fahrzeugteil 15 gebracht werden, wodurch, wie zuvor erwähnt, die "Durchlademöglichkeit" geschaffen wird.

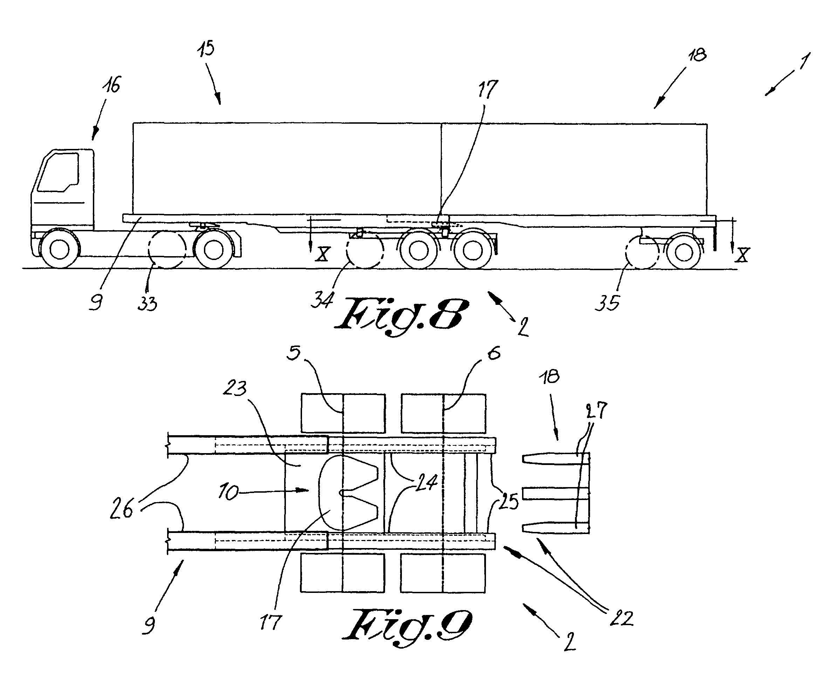

Es ist deutlich, dass das vorgenannte zweite Fahrzeugteil 18 auch direkt an das ziehende Fahrzeugteil 16 gekoppelt werden kann, wie in Figur 7 abgebildet.

In Figur 8 ist eine besondere Variante dargestellt, wobei das Ganze Koppelmittel 22 umfasst, die die Verwirklichung einer starren Verbindung zwischen einerseits dem mittels des vorgenannten verfahrbaren Elements 2 und des vorgenannten Wagenrahmens 9 geformten ersten Fahrzeugteil 15 und andererseits dem als Auflieger ausgeführten zweiten Fahrzeugteil 18 gestatten.

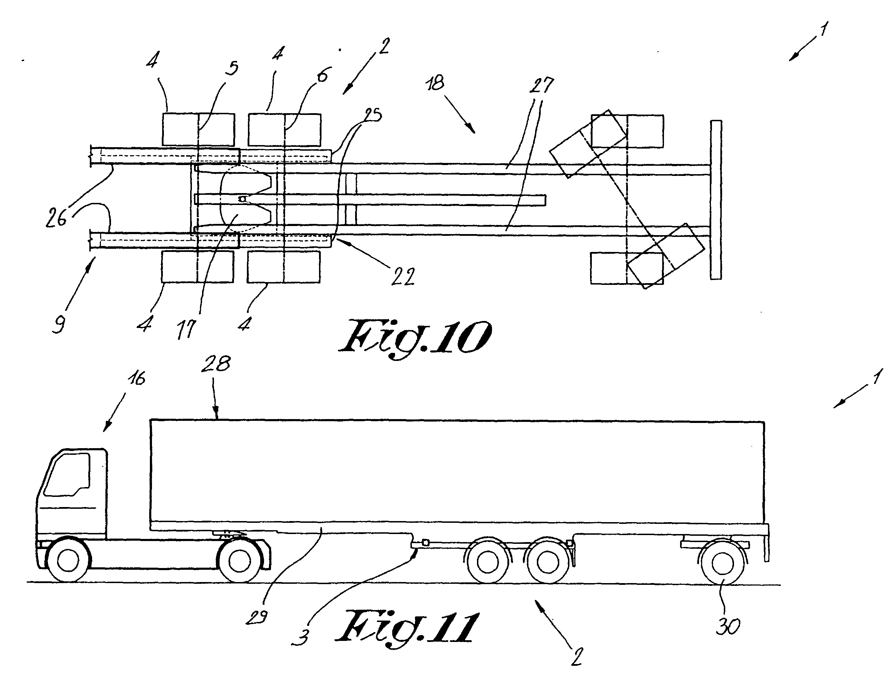

Die gegenseitige Verstellbarkeit zwischen dem verfahrbaren Element 2 und dem Wagenrahmen 9 einerseits und den zweiten Mitteln 10 andererseits, spezieller der Kupplungsscheibe 17 und des Rahmens 14 des verfahrbaren Elements 2, kann auf verschiedene Arten verwirklicht werden. Vorzugsweise jedoch werden in Bezug zueinander verschiebbare gekoppelte Teile verwendet, wie in Figur 9 schematisch dargestellt. Hierbei ist die Kupplungsschüssel 17 auf einem Schlitten 23 befestigt, der in Führungen 24, die am Rahmen 14 des verfahrbaren Elements 2 angebracht sind, verschiebbar sind. Der Rahmen 14 selbst wird durch Profile 25 geformt, die ihrerseits in Profilen 26 des Wagenrahmens 9 verschiebbar sind.

Wie in Figur 10 dargestellt, formen die Profile 25 und 26, für den gekoppelten Zustand von Figur 8, auch eine Führung für den Rahmen des zweiten Fahrzeugteils 18, spezieller für die dazu gehörenden Profile 27. Auf diese Weise wird eine starre Verbindung zwischen den Fahrzeugteilen 15 und 18 erhalten.

Es wird angemerkt, dass die starre Verbindung zwischen dem ersten Fahrzeugteil 15 und dem zweiten Fahrzeugteil 18 eventuell auf andere Weise verwirklicht werden kann. Das Verwirklichen anderer Koppelungen, die derartige starre Verbindungen gestatten, liegt, ausgehend von der vorangehenden Beschreibung, innerhalb des Bereichs eines Fachmanns, und andere Möglichkeiten werden dann auch nicht näher beschrieben.

Selbstverständlich wird das Ganze mit den nötigen Koppelmitteln und/oder Verriegelungsmitteln, womit die verschiedenen Teile in Bezug zueinander in den gewünschten Positionen blockiert werden können, versehen.

Figur 11 stellt noch eine besondere Ausführungsform dar, wobei die verfahrbare Konstruktion 1 ein als Auflieger ausgeführtes Fahrzeugteil 28 umfasst, mit einem einteilig durchlaufenden Wagenrahmen 29 von relativ großer Länge, dessen vorderes Ende, wie abgebildet, durch ein ziehendes Fahrzeugteil 16 gestützt werden kann, während am anderen Ende eine oder mehr mit Rädern 30 versehene Achsen vorhanden sind. Die Besonderheit besteht darin, dass das vorgenannte verfahrbare Element 2 hierbei einen zwischengeschalteten Stützpunkt zwischen dem vorderen und hinteren Ende des Wagenrahmens 29 bildet.

Wie vorgenannt, ist ein solcher zwischengeschalteter Stützpunkt auch in Kombination mit einem Anhänger möglich, wobei dann der vorgenannte Wagenrahmen 29 vorn keinen Drehzapfen besitzt, sondern eine Stütze mittels eines um eine vertikale Drehachse drehbaren Rädersatzes, der mit einer Deichsel versehen ist.

Gemäß einer anderen, nicht dargestellten Ausführungsform kann das verfahrbare Element 2 auch in Kombination mit dem Wagenrahmen eines Anhängers angewendet werden, wobei dieses verfahrbare Element 2 als hinterer Stützpunkt fungiert.

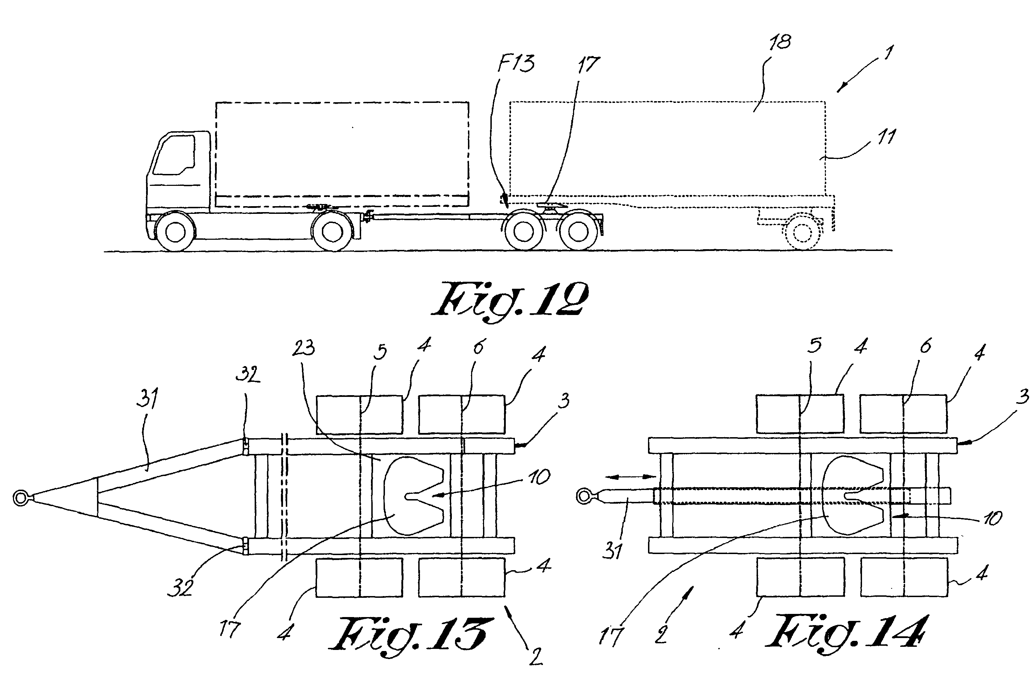

Wie vorgenannt, wird bevorzugt, dass das verfahrbare Element 2 mit einer Deichsel 31 und/oder Mitteln zum Anbringen einer Deichsel 31 versehen ist, wovon ein Beispiel in den Figuren 12 und 13 dargestellt ist. Dies gestattet, dass das verfahrbare Element 2 als Rangiergerät fungieren kann oder als vorderster Stützpunkt einer Anhängerkonfiguration, wie schematisch in Figur 12 abgebildet. Mit einer "Deichsel" sind hier traditionelle Deichseln gemeint, wie auch jede Art von Verbindungselement, das eine gleichartige Koppelung gestattet.

Es ist deutlich, dass im Rahmen der vorliegenden Erfindung die Deichsel 31 vorzugsweise abnehmbar und/oder unterbringbar ist, sodass sie in Anwendungen, bei denen sie überflüssig ist, kein Hindernis darstellt.

In einer klassischen Ausführung, wie in Figur 13 abgebildet, kann eine derartige Deichsel 31 beispielsweise mittels Koppelteilen 32, die eine Entkoppelung gestatten, abnehmbar angebracht werden.

Eine unterbringbare Deichsel 31 ist beispielsweise möglich, indem sie einschiebbar gemacht wird, was konstruktiv besonders einfach verwirklicht werden kann, wenn für die Deichsel 31, wie in Figur 14 abgebildet, ein einfacher Teleskop-Deichselbaum verwendet wird.

Es ist deutlich, dass ein oder mehrere der Fahrzeugteile 15-16-18-28 auch mehr Achsen besitzen können, als in durchgezogener Linie in den Figuren dargestellt ist. In Figur 8 ist beispielsweise angedeutet, dass das ziehende Fahrzeugteil 16 und/oder das erste Fahrzeugteil 15 und/oder das zweite Fahrzeugteil 18 eine Achse mehr besitzen kann, jeweils 33-34-35. Dies ist auch in den anderen dargestellten Kombinationen möglich.

Es ist ebenfalls nicht ausgeschlossen, den Wagenrahmen 9 hinten nicht ausschließlich durch das verfahrbare Element 2 zu stützen, sondern eventuell außerdem auch eine oder mehr Achsen vorzusehen, die fest unter dem Wagenrahmen 9 montiert sind.

Es ist deutlich, dass auch eine oder mehr Achsen, beziehungsweise Räder, drehbar sein können, sodass sie sich an die Fahrtrichtung des Fahrzeugs anpassen, um seitliche Torsions- und Schubkräfte auszuschließen. Unter dem Begriff "Achsen" sind in der vorangehenden Beschreibung alle Formen von Achskonstruktionen zu verstehen, ungeachtet dessen, ob es sich um eine durchlaufende Achse handelt oder um eine von zwei Achsteilen, die nur in Höhe der Räder vorhanden sind, geformte Achse handelt.

Es ist deutlich, dass mittels der Erfindung Kombinationen erhalten werden können, die sowohl als Auflieger, als auch als Anhänger betrachtet werden können. Abhängig von der herrschenden Gesetzgebung kann dann auch eine staatliche Anerkennung angefragt werden, die sich in Bezug auf Transportmöglichkeiten am vorteilhaftesten auswirkt.

Jedes Fahrzeugteil 15-18-28 kann dann auch verschiedene nutzbare Längen aufweisen. Das erste Fahrzeugteil 15 wird in einer praktischen Ausführungsform eine nutzbare Länge von 7,6 Metern besitzen. Das Fahrzeugteil 18 weist in den Anwendungen von den Figuren 4 und 7 vorzugsweise eine nutzbare Länge von ebenfalls 7,6 Metern auf, während dies in der Anwendung von Figur 8 beispielsweise 6 Meter ist. Das Fahrzeugteil 28 kann in einer praktischen Ausführungsform mit einer Länge von 13,7 Metern ausgeführt werden. In der Anwendung, wobei das zweite Fahrzeugteil 18 als Anhänger fungiert, beispielsweise wie in Figur 12 abgebildet, wird es vorzugsweise eine Länge bis 9,3 Meter aufweisen.

Es ist deutlich, dass die Erfindung für allerhand Transporte angewendet werden kann, wobei die jeweiligen gezogenen Fahrzeugteile entweder mit einem Aufbau versehen sein können oder nicht.

Schließlich wird angemerkt, dass das verfahrbare Gestell, da es zwei Achsen besitzt, in abgekoppeltem Zustand nicht umkippt und somit flott unter die jeweiligen Wagenrahmen gerollt werden kann.

## Patentansprüche

1. Verfahrbare Konstruktion für Gütertransport und dergleichen, die einen Wagenrahmen (9) und ein verfahrbares Element (2) umfasst, das mindestens geformt ist aus einem Gestell (3), das durch mindestens zwei mit Rädern (4) versehene Achsen (5-6) getragen wird, wobei dieses Gestell (3) einerseits erste Mittel (7) umfasst, wodurch es unter einem Wagenrahmen (9), angebracht werden kann, und andererseits zweite Mittel (10) umfasst, wodurch ein Auflieger (11) mit seinem vorderen Ende (12) scharnierbeweglich an dem besagten Gestell (3) befestigt werden kann, wobei das verfahrbare Element (2) in Bezug zum Wagenrahmen (9) gemäß der Fahrtrichtung bewegbar und/oder verstellbar ist, **dadurch gekennzeichnet, dass** die besagten ersten Mittel (7) durch einen Benutzer bedienbare Koppelelemente (13) umfassen, womit der Rahmen (14) des Gestells (3) lösbar mit dem besagten Wagenrahmen (9) verbunden werden kann.

2. Verfahrbare Konstruktion gemäß Anspruch 1, **dadurch gekennzeichnet, dass** das verfahrbare Element (2) mindestens derart an den Wagenrahmen (9) gekoppelt werden kann, das es bis über das hintere Ende des Wagenrahmens (9) hinaus reicht.

3. Verfahrbare Konstruktion gemäß Anspruch 2, **dadurch gekennzeichnet, dass** das verfahrbare Element (2) mit dem Wagenrahmen (9) gekoppelt werden kann, in einer derartigen Position, dass es über einen Abstand hinter dem hinteren Ende des Wagenrahmens (9) herausragt, welcher Abstand ausreichend groß ist, sodass ein als Auflieger (11) ausgeführtes zweites Fahrzeugteil (18) mittels der besagten zweiten Mittel (10) scharnierbeweglich an das mittels des Wagenrahmens (9) und des verfahrbaren Elements (2) geformte erste Fahrzeugteil (15) gekoppelt werden kann.

4. Verfahrbare Konstruktion gemäß einem der vorgenannten Ansprüche, **dadurch gekennzeichnet, dass** die besagten zweiten Mittel (10) aus einer Kupplungsscheibe (17) bestehen.

5. Verfahrbare Konstruktion gemäß einem der vorgenannten Ansprüche, **dadurch gekennzeichnet, dass** die Position der besagten zweiten Mittel (10), spezieller der Kupplungsscheibe (17), in Bezug zu dem verfahrbaren Element (2) zumindest in Längsrichtung einstellbar ist.

6. Verfahrbare Konstruktion gemäß einem der vorgenannten Ansprüche, **dadurch gekennzeichnet, dass** die Position der vorgenannten zweiten Mittel (10), spezieller der Kupplungsscheibe (17), in Bezug zu dem verfahrbaren Element (2) zumindest in der Höhe einstellbar ist.

7. Verfahrbare Konstruktion gemäß einem der vorgenannten Ansprüche, **dadurch gekennzeichnet, dass** das Ganze Einstellmittel umfasst, die, wenn einerseits das verfahrbare Element (2) mit dem besagten Wagenrahmen (9) gekoppelt ist, womit es ein erstes Fahrzeugteil (15) formt, und andererseits ein zweites, als Auflieger ausgeführtes Fahrzeugteil (18) mit seinem vorderen Ende an das verfahrbare Element (2) gekoppelt ist, gestatten, dass das zweite Fahrzeugteil (18) in Längsrichtung in Bezug zu dem ersten Fahrzeugteil (15) zwischen mindestens zwei Positionen bewegt werden kann, einer ersten Position, worin die Ladeflächen beider Fahrzeugteile (15-18) gegeneinander oder teilweise ineinander positioniert sind, beziehungsweise einer zweiten Position, wobei die Ladeflächen sich in einem Abstand auseinander befinden.

8. Verfahrbare Konstruktion gemäß Anspruch 7, **dadurch gekennzeichnet, dass** die besagten zwei Fahrzeugteile (15-18) in Bezug zueinander derart gegeneinander positioniert werden können, dass eine Durchlademöglichkeit entsteht.

9. Verfahrbare Konstruktion gemäß einem der vorgenannten Ansprüche, **dadurch gekennzeichnet, dass** sie Koppelmittel (22) umfasst, die die Verwirklichung einer starren Verbindung gestatten zwischen, einerseits, dem mittels des besagten verfahrbaren Elements (2) und des besagten Wagenrahmens (9) geformten ersten Fahrzeugteil (15) und andererseits einem als ein Auflieger (11) ausgeführten zweiten Fahrzeugteil (18), das mit seinem vorderen Ende mit dem hinteren Ende des ersten Fahrzeugteils (15) zusammenwirkt.

10. Verfahrbare Konstruktion gemäß einem der vorgenannten Ansprüche, **dadurch gekennzeichnet, dass** das verfahrbare Element (2) mit einer Deichsel (31) und/oder Mitteln zum Anbringen einer Deichsel (31) versehen ist.

11. Verfahrbare Konstruktion gemäß Anspruch 10, **dadurch gekennzeichnet, dass** die Deichsel (31) am verfahrbaren Element (2) unterbringbar ist.

12. Verfahrbare Konstruktion gemäß einem der vorgenannten Ansprüche, **dadurch gekennzeichnet, dass** das verfahrbare Element (2) derart konfiguriert ist, dass es eine Stützfunktion für das hintere Ende eines als Auflieger oder Anhänger ausgeführten Wagenrahmens (9) erfüllen kann.

13. Verfahrbare Konstruktion gemäß Anspruch 1, **dadurch gekennzeichnet, dass** sie ein als Auflieger oder Anhänger ausgeführtes Fahrzeugteil (28) umfasst, mit einem einteilig durchlaufenden Wagenrahmen (29), dessen vorderes Ende an ein ziehendes Fahrzeugteil (16) gekoppelt werden kann, während am hinteren Ende eine oder mehr mit Rädern (30) versehene Achsen vorhanden sind; und dass das vorgenannte verfahrbare Element (2) derart konfiguriert ist, dass es als Stützpunkt zwischen dem vorgenannten vorderen und hinteren Ende an dem durchlaufenden Wagenrahmen (29) angebracht werden kann.

## Claims

1. Mobile apparatus for transporting goods and the like, comprising a vehicle frame (9) and a mobile element (2), at least formed of a chassis (3) which is carried by at least two shafts (5-6) provided with wheels (4), whereby said chassis (3) comprises first means (7) on the one hand with which it can be provided under a vehicle frame (9), and second means (10) on the other hand with which a trailer (11) can be hinge-mounted to said chassis (3) with its front end (12), whereby the mobile element (2) can be moved and/or adjusted in relation to the vehicle frame (9) in the driving direction, **characterised in that** said first means (7) comprise coupling elements (13) which can be operated by a user with which the frame (14) of the chassis (3) can be connected to said vehicle frame (9) in a detachable manner.

2. Mobile apparatus according to claim 1, **characterised in that** the mobile element (2) can be coupled to the vehicle frame (9) at least in such a manner that it extends beyond the rear end of the vehicle frame (9).

3. Mobile apparatus according to claim 2, **characterised in that** the mobile element (2) can be coupled to the vehicle frame (9) in such a position that it extends beyond the rear end of the vehicle frame (9) over a distance, which distance is sufficiently large, such that a second vehicle part (18) embodied as a trailer (11) can be hinge-mounted to the first vehicle part (15) formed of the vehicle frame (9) and the mobile element (2) by means of said second means (10).

4. Mobile apparatus according to any of the preceding claims, **characterised in that** said second means (10) consist of a clutch plate (17).

5. Mobile apparatus according to any of the preceding claims, **characterised in that** the position of said second means (10), in particular of the clutch plate (17), can be adjusted at least in the longitudinal direction in relation to the mobile element (2).

6. Mobile apparatus according to any of the preceding claims, **characterised in that** the position of said second means (10), in particular of the clutch plate (17), can be adjusted at least in height in relation to the mobile element (2).

7. Mobile apparatus according to any of the preceding claims, **characterised in that** the whole comprises adjusting means which, when the mobile element (2) is coupled to said vehicle frame (9) on the one hand, with which it forms a first vehicle part (15), and when a second vehicle part (18) embodied as a trailer is coupled to the mobile element (2) with its front end on the other hand, make it possible for the second vehicle part (18) to move between at least two positions in the longitudinal direction in relation to the first vehicle part (15), namely a first position in which the loading platforms of both vehicle parts (15-18) are positioned against each other or partly in each other, and a second position in which the loading platforms are situated at a distance from each other.

8. Mobile apparatus according to claim 7, **characterised in that** said two vehicle parts (15-18) can be positioned against each other in such a manner that loading through becomes possible.

9. Mobile apparatus according to any of the preceding claims, **characterised in that** it comprises coupling means (22) which make it possible to realise a rigid connection between the first vehicle part (15) formed by means of said mobile element (2) and said vehicle frame (9) on the one hand, and a second vehicle part (18) embodied as a trailer (11) on the other hand, whose front end works in conjunction with the rear end of the first vehicle part (15).

10. Mobile apparatus according to any of the preceding claims, **characterised in that** the mobile element (2) is provided with a drawbar (31) and/or means for providing a drawbar (31).

11. Mobile apparatus according to claim 10, **characterised in that** the drawbar (31) can be provided to the mobile element (2).

12. Mobile apparatus according to any of the preceding claims, **characterised in that** the mobile element (2) is configured such that it can assume a supporting function for the rear end of a vehicle frame (9) embodied as a trailer or towed vehicle.

13. Mobile apparatus according to claim 1, **characterised in that** it comprises a vehicle part (28) embodied as a trailer or towed vehicle with a one-piece continuous vehicle frame (29) whose front end can be coupled to a towing vehicle part (16), whereas the rear end is provided with one or several shafts equipped with wheels (30); and **in that** said mobile element (2) is configured such that it can be provided as a supporting point to the continuous vehicle frame (29) between said front and rear ends.

## Revendications

1. Structure que l'on peut faire circuler, destinée au transport de marchandises et analogues, qui comprend un cadre pour véhicule (9) et un élément (2) que l'on peut faire circuler, ce dernier étant au moins formé à partir d'un châssis (3) qui est porté par au moins deux essieux (5 - 6) munis de roues (4), ce châssis (3) comprenant d'une part des premiers moyens (7) par lesquels il peut venir s'appliquer en dessous d'un cadre pour véhicule (9) et comprenant d'autre part des deuxièmes moyens (10) par lesquels une semi-remorque (11) peut venir se fixer au châssis susmentionné (3), en mobilité à la manière d'une charnière, avec son extrémité avant (12), l'élément (2) que l'on peut faire circuler étant mobile et/ou déplaçable par rapport au cadre pour véhicule (9), dans le sens de la marche, **caractérisée en ce que** les premiers moyens précités (7) comprennent des éléments d'attelage (13) qui peuvent être actionnés par un utilisateur, le cadre (14) du châssis (3) pouvant être relié de manière amovible audit cadre (9) pour véhicule.

2. Structure que l'on peut faire circuler selon la revendication 1, **caractérisée en ce que** l'élément (2) que l'on peut faire circuler peut être attelé au cadre (9) pour véhicule au moins de telle sorte qu'il s'étende jusqu'à un endroit situé au-delà de l'extrémité arrière du cadre (9) pour véhicule.

3. Structure que l'on peut faire circuler selon la revendication 2, **caractérisée en ce que** l'élément (2) que l'on peut faire circuler peut venir s'atteler au cadre (9) pour véhicule dans une position telle qu'il fait saillie au-delà d'une distance à l'arrière de l'extrémité arrière du cadre (9) pour véhicule, ladite distance étant suffisamment grande pour faire en sorte qu'une deuxième partie de véhicule (18) réalisée sous la forme d'une semi-remorque (11) peut venir s'atteler, à l'aide des deuxièmes moyens susmentionnés (10), en mobilité à la manière d'une charnière, à la première partie de véhicule (15) formée par le cadre (9) pour véhicule et par l'élément (2) que l'on peut faire circuler.

4. Structure que l'on peut faire circuler selon l'une quelconque des revendications précédentes, **caractérisée en ce que** les deuxièmes moyens susmentionnés (10) sont constitués d'un disque d'attelage (17).

5. Structure que l'on peut faire circuler selon l'une quelconque des revendications précédentes, **caractérisée en ce que** la position des deuxièmes moyens susmentionnés (10), de manière spécifique du disque d'attelage (17), peut être réglée, au moins en direction longitudinale, par rapport à l'élément (2) que l'on peut faire circuler.

6. Structure que l'on peut faire circuler selon l'une quelconque des revendications précédentes, **caractérisée en ce que** la position des deuxièmes moyens susmentionnés (10), de manière spécifique du disque d'attelage (17), peut être réglée, au moins en hauteur, par rapport à l'élément (2) que l'on peut faire circuler.

7. Structure que l'on peut faire circuler selon l'une quelconque des revendications précédentes, **caractérisée en ce que** l'ensemble comprend des moyens de réglage qui permettent, lorsque d'une part l'élément (2) que l'on peut faire circuler est attelé au cadre susmentionné (9) pour véhicule, de telle sorte que l'on obtient une première partie de véhicule (15), et lorsque d'autre part la deuxième partie de véhicule (18) réalisée sous la forme d'un semi-remorque est attelée à l'élément (2) que l'on peut faire circuler, avec son extrémité avant, de déplacer la deuxième partie de véhicule (18) en direction longitudinale par rapport à la première partie de véhicule (15) entre au moins deux positions, une première position dans laquelle les plates-formes de chargement des deux parties de véhicules (15 - 18) étant positionnées l'une contre l'autre ou en partie l'une dans l'autre, respectivement une deuxième position dans laquelle les plates-formes de chargement se trouvent à l'écart l'une de l'autre.

8. Structure que l'on peut faire circuler selon la revendication 7, **caractérisée en ce que** les deux parties de véhicule susmentionné (15 - 18) peuvent être positionnées l'une contre l'autre de telle sorte que l'on obtient une possibilité de chargement continu.

9. Structure que l'on peut faire circuler selon l'une quelconque des revendications précédentes, **caractérisée en ce qu'**elle comprend des moyens d'attelage (22) qui permettent la réalisation d'une liaison rigide entre, d'une part la première partie de véhicule (15) formé au moyen de l'élément susmentionné (2) que l'on peut faire circuler et, d'autre part et une deuxième partie de véhicule (18) réalisée sous la forme d'un semi-remorque (11), dont l'extrémité avant coopère avec l'extrémité arrière de la première partie de véhicule (15).

10. Structure que l'on peut faire circuler selon l'une quelconque des revendications précédentes, **caractérisée en ce que** l'élément (2) que l'on peut faire circuler est muni d'un timon (31) et/ou de moyens pour l'application d'un timon (31).

11. Structure que l'on peut faire circuler selon la revendication 10, **caractérisée en ce que** le timon (31) peut venir s'appliquer en dessous de l'élément (2) que l'on peut faire circuler.

12. Structure que l'on peut faire circuler selon l'une quelconque des revendications précédentes, **caractérisée en ce que** l'élément (2) que l'on peut faire circuler est configuré de telle sorte qu'il peut remplir une fonction de support pour l'extrémité arrière d'un cadre (9) pour véhicule réalisé sous la forme d'un semi-remorque ou d'un tracteur.

13. Structure que l'on peut faire circuler selon l'une quelconque des revendications précédentes, **caractérisée en ce qu'**elle comprend une partie de véhicule (21) réalisée sous la forme d'un semi-remorque ou d'un tracteur (28), comprenant un cadre (29) pour véhicule continu en une seule pièce dont l'extrémité avant peut venir s'atteler à une partie de véhicule de traction (16), tandis qu'un ou plusieurs essieux munis de roues (30) sont présents à l'extrémité arrière ; et **en ce que** l'élément susmentionné (2) que l'on peut faire circuler est configuré de telle sorte qu'il peut être appliqué sous la forme de support ponctuel, entre l'extrémité arrière et l'extrémité avant susmentionnées, au cadre continu (29) pour véhicule.
